Europäisches Patentamt

European Patent Office

Office européen des brevets

(11) Veröffentlichungsnummer : **0 441 203 A2**

(12) # EUROPÄISCHE PATENTANMELDUNG

(21) Anmeldenummer : 91100974.4

(22) Anmeldetag : 25.01.91

(51) Int. Cl.⁵ : **B60J 5/00**

(30) Priorität : 27.01.90 DE 9000901 U

(43) Veröffentlichungstag der Anmeldung :
**14.08.91 Patentblatt 91/33**

(84) Benannte Vertragsstaaten :
**AT BE DE FR GB**

(71) Anmelder : Klöckner-Humboldt-Deutz
**Aktiengesellschaft**
**Deutz-Mülheimer-Strasse 111 Postfach 80 05**
**09**
**W-5000 Köln 80 (DE)**

(72) Erfinder : Pöhl, Peter
**Nordstrasse 21**
**W-4049 Rommerskirchen (DE)**
Erfinder : Orth, Werner
**Kuddenberg 7**
**W-5067 Kürten (DE)**

(54) **Anordnung eines Dämpferelementes an einer Kabinentür.**

EP 0 441 203 A2

# ANORDNUNG EINES DÄMPFERELEMENTES AN EINER KABINENTÜR EINER FAHRERKABINE

Die Erfindung betrifft die Anordnung eines Dämpferelementes an einer Fahrerkaninentür gemäß dem Oberbegriff der unabhängigen Patentansprüche.

Aus dem Fahrzeugbau, besonders bei land- und bauwirtschaftlichen Fahrzeugen, ist allgemein bekannt, die Fahrerkabinentür mit einem Dämpferelement zu versehen, um ein gedämpftes Auf- und Zuschlagen der Rahmentür zu ermöglichen. Eine Fahrerkabine Desteht in der Regel aus einer A-Säule und mindestens einer weiteren Säule (B-Säule), wobei die Kabinentür nach hinten ausschwenkbar ist und an einer Säule mit Scharnieren befestigt ist, Um ein Auf- bzw. Zufallen der Kabinentür zu verhindern, ist ein Dämpferelement an der Kabinentür angebracht, das in Form von einem Stoßdämpfer mit einem Ende an der Kabinentür selber befestigt ist und mit seinem anderen Ende unter dem Kabinendachrahmen in Richtung der A-Säule der Fahrerkabine befestigt ist.

Diese Anordnung hat den Nachteil, daß aufgrund der gewollt geringen Höhe der Fahrerkabine die Türöffnung nach oben durch das Dämpferelement begrenzt ist, Somit sind Verletzungsgefahren, speziell Kopfverletzungen, beim Einstiegs- und Ausstiegsvorgang nicht auszuschließen.

Der Erfindung liegt die Aufgabe zugrunde, ein Dämpferelement für die Kabinentür einer Fahrerkabine so anzuordnen, daß der zuvor beschriebene Nachteil vermieden wird.

Diese Aufgabe wird von der Anordnung des Dämpferelementes gemäß Patentanspruch 1 dadurch gelöst, daß das Dämpferelement in Form eines Stoßdämpfer, der mit einem Ende an der Kabinentüre befestigt ist, nicht mit seinem anderen Ende unter dem Kabinendachrahmen betestigt wird, sondern über der Kabinentür am Kabinendachrahmen (unter einem vorhandenen Dachüberstand) angeschiagen wird.

Daher kann die gesamte Dämpferelementanordnung wesentlich höher angebracht werden, so daß sich ein erheblich größerer Einstiegsbereich ergibt und Verletzungsgefahren ausgeschlossen werden können. Außerdem wird der Ein- und Aussteigevorgang durch den jetzt höheren und breiten Türrahmen wesentlich sicherer und bequemer.

In Weiterbildung der Erfindung liegt ein Anschlagpunkt des Dämpferelementes an der Kabinentür in dem der A-Säule abgewandten Drittel der Kabinentür (von außen gesehen), während der zweite Anschlagpunkt des Dämpferelementes sich außen am kabinendachrahmen befindet, wobei das Dach mit einem Dachüberstand versehen sein kann.

Dieser zweite Anschlagpunkt des Dämpferelements befindet sich etwa in dem der A-Säule zugewandten Drittel oberhalb der Fahrerkabinentür seitlich am Dachrahmen.

In einer weiteren Ausgestaltung können die Anschlagpunkte des Dämpferelementes auch vertauscht werden, so daß der erste Anschlagpunkt des Dämpferelementes an der Kabinentür in dem der A-Säule zugewandten Drittel der Kabinentür (von außen gesehen) liegt.

Je nach Größe und Anordnung des Dämpferelementes können die Anschlagpunkte auch weiter nach rechts, bzw. weiter nach links verschoben werden. Außerdem ist es möglich, daß die Kabinentüre nicht an der B-Säule, sondern an der A-Säule mit Scharnieren angeschlagen wird, so daß sie nach vorne aufklappt. Auch in dieser Anordnung der Kabinentür ist ein Einsatz des oben beschriebenen Dämpferelementes möglich.

In Weiterbildung der Erfindung kommen Gas- oder Öldruckdämpferelemente zum Einsatz, die einfach und sicher zu handhaben und außerdem kostengünstig sind.

In einer weiteren Ausbildung kann das Dämpferelement in einer Vertiefung in dem Dachrahmen verdeckt angebracht werden, so daß die Kabinentür einen glatten Abschlutß mit den übrigen Kabinenwänden hat und das Dämpferelement vor Verschmutzung geschützt ist.

Die nachfolgende Zeichnungsbeschreibung beinhaltet weitere Ausgestaltungen der Erfindung, wobei die einzelnen Figuren zeigen :

Fig.1 : Draufsicht auf die Kabinentür mit angedeuteter Fahrerkabine

Fig.2 : Ausschnitt (Querschnitt) durch die Kabinentür mit angedeutetem Dach.

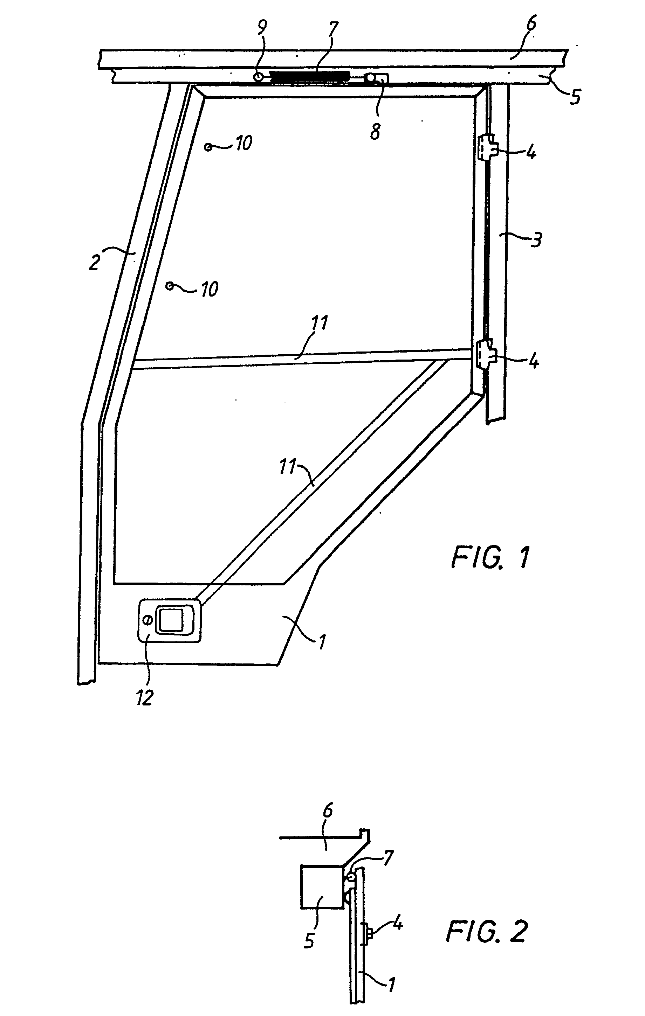

Figur 1 zeigt die erfindungsgemäße Kabinentür 1, die sich zwischen der links gezeichneten A-Säule 2 und der B-Säule 3 befindet, wobei die Kabinentür 1 mit zwei Scharnieren 4 rechts an der B-Säule 3 angeschlagen ist. Auf der A-Säule 2 und der B-Säule 3 befindet sich ein Dachrahmen 5, auf dem ein Dach 6, das über den Dachrahmen 5 übersteht, angebracht ist.

Das mit 7 bezeichnete Dämpferelement befindet sich am oberen Rand der Kabinentür 1, wobei der rechte Anschlag des Dämpferelementes 7 über einen Anschlagwinkel 8 an der Rahmentür 1 befestigt ist und der linke Befestigungspunkt 9 am Dachrahmen 5 der Fahrerkabine unter dem Dach 6 liegt. Vorhanden sind weiterhin Befestigungslöcher 10 für einen Spiegel sowie ein Haltegriffe 11 und ein Türgriff mit Schloß 12.

Figur 2 zeigt einen Ausschnitt (Querschnitt) der Fahrerkabinentür 1, wobei die gesamte Anordnung des Dämpferelementes 7 auf Höhe des Kabinendachrahmens 5 der Fahrerkabine, bei der das Dach 6 mit einem Dachüberstand versehen ist, verlagert ist, so daß die eingangs geschilderten Vorteile der Erfindung wirksam werden.

**Patentansprüche**

1. Fahrerkabine für land- und bauwirtschaftliche Fahrzeuge, insbesondere für einen Schlepper, mit einem Dach (6) und einem Dachrahmen (5), wobei der Dachrahmen (5) auf einer A-Säule (2) und zumindest einer weiteren Säule (3) befestigt ist, und mit mindestens einer Kabinentür (1), die über Scharniere (4) an einer Säule angeschlagen ist, wobei die kabinentür (1) ein Dämpferelement (7) besitzt, dadurch gekennzeichnet, daß das Dämpferelement (7) an der Oberkante der Kabinentür (1) und an dem Dachrahmen (6) in Fahrzeugrichtung seitlich unterhalb des Daches (5) befestigt ist.

2. Fahrerkabine nach Anspruch 1, dadurch gekennzeichnet, daß das Dämpferelement (7) in einem der A-Säule (2) zugewandten Bereich befestigt ist.

3. Fahrerkabine nach Anspruch 1 oder 2, dadurch gekennzeichnet, daß ein zweiter Befestigungspunkt des Dämpferelementes (7) in einem der A-Säule (2) abgewandten Drittel der Kabinentür (1) liegt.

4. Fahrerkabine nach einem der Ansprüche 1 bis 3, dadurch gekennzeichnet, daß das Dämpferelement (7) als Öl- oder Luftdruckdämpferelement ausführbar ist.

5. Fahrerkabine nach einem der vorhergehenden Ansprüche, dadurch gekennzeichnet, daß das Dämpferelement (7) in einer Vertiefung im Dachrahmen (5) der Fahrerkabine von der Kabinentür (1) vollkommen verdeckt angebracht ist.

FIG. 1

FIG. 2